# EUROPÄISCHE PATENTSCHRIFT

(11) **EP 2 048 856 B1**
(45) Veröffentlichungstag und Bekanntmachung des Hinweises auf die Patenterteilung: **07.12.2016**
(21) Anmeldenummer: 08166136.5
(22) Anmeldetag: 08.10.2008
(51) Int. Cl.: G06F 9/44, H04L 29/08

(54) **Verfahren zum Betreiben einer Datenverarbeitungseinheit**
Method for operating a data processing unit
Procédé destiné au fonctionnement d'une unité de traitement de données

(30) Priorität: 09.10.2007 DE 102007048483
(43) Veröffentlichungstag der Anmeldung: 15.04.2009
(73) Patentinhaber: Vodafone Holding GmbH, 40213 Düsseldorf (DE)
(72) Erfinder: Gaelings, Engelbert, Dr., 47802, Krefeld (DE); Wessel, Frank, Dr., 41747, Viersen (DE); Röhrig, Guido, 41469, Neuss (DE); Verstraeten, Heinz-Dieter, 47466, Neuss (DE)
(74) Vertreter: Vogel, Andreas

(56) Entgegenhaltungen:
- EP-A- 1 465 067
- EP-A- 1 837 756
- US-A1- 2004 095 382
- US-A1- 2006 107 119
- US-B1- 6 292 941

## Beschreibung

Die Erfindung betrifft ein Verfahren zum Betreiben einer Datenverarbeitungseinheit sowie eine Kommunikationseinheit für ein Mobilfunknetz.

Um Datenverarbeitungseinheiten, wie etwa einen Personal Computer, sowie dessen Peripheriegerät zu steuern, bedarf es eines Betriebssystems. Dabei handelt es sich um ein Computerprogrammprodukt, welches auf der Datenverarbeitungseinheit abläuft und eine Schnittstelle zwischen einem Benutzer und der Datenverarbeitungseinheit bildet. Im Allgemeinen ist das Betriebssystem auf einer Festplatte gespeichert und wird bei einer Aktivierung der Datenverarbeitungseinheit gestartet. Aus einsatzspezifischen sowie ergonomischen Gründen können moderne Betriebssysteme individuell auf die Anforderungen eines Benutzers eingestellt werden.

Dieses hat allerdings zur Folge, dass ein Benutzer bei der Nutzung einer ihm fremden Datenverarbeitungseinheit nicht auf die gewohnte Einstellung des Betriebssystems zurückgreifen kann. Insbesondere ist es dem Benutzer nicht möglich, auf Datensätze zuzugreifen, welcher dieser auf seiner Datenverarbeitungseinheit hinterlegt hat.

Als unzureichend zur Lösung des vorgenannten Problems hat sich die Verwendung eines bootfähigen Speichermediums - etwa USB-Stick - herausgestellt. Nach einer Aktivierung kann die Datenverarbeitungseinheit ein personalisiertes Betriebssystem von dem Speichermedium laden und verwenden. Allerdings ist diese Vorgehensweise unflexibel und gebunden an die Möglichkeiten des lokalen Rechners. Darüber hinaus ist es oftmals nicht erwünscht, auf einer fremden Datenverarbeitungseinheit ein neues Betriebssystem aufzuspielen.

Ebenfalls nicht überwunden werden können die Nachteile durch die ausschließliche Verwendung einer mobilen Kommunikationseinheit. Solcher Art Kommunikationseinheiten, wie etwa Mobilfunktelefone, ermöglichen zwar mit einem Internet Kontakt aufzunehmen und Daten unabhängig vom Standort zu transferieren. Eine Eingabe von Informationen hat sich allerdings als umständlich und wenig ergonomisch herausgestellt. Aufgabe der vorliegenden Erfindung ist es, ein Verfahren zum Betreiben einer Datenverarbeitungseinheit zu schaffen, welches die vorgenannten Nachteile vermeidet, insbesondere eine Anpassung einer beliebigen Datenverarbeitungseinheit an benutzerspezifische Bedürfnisse ermöglicht.

US 2006/107119 A1 offenbart das Betreiben einer Datenverarbeitungseinheit mittels booten eines Betriebssystems von einer Serviceeinheit und nachträglichem Laden eines bootable image von einem Server aus einem Netzwerk, wobei das bootable image gewisse Einstellungen beinhalten kann.

EP 1 837 756 A offenbart das Betreiben einer Datenverarbeitungseinheit mit einer Kommunikationseinheit und einer darauf gespeicherten personalisierten Einstellung des Betriebssystems.

Die Aufgabe wird erfindungsgemäß durch ein Verfahren zum Betreiben einer Datenverarbeitungseinheit mit den Merkmalen gemäß des unabhängigen Patentanspruch 1 sowie eine Kommunikationseinheit für ein Mobilfunknetz mit den Merkmalen gemäß des unabhängigen Anspruches 16 gelöst. In den abhängigen Ansprüchen sind bevorzugte Weiterentwicklungen der Erfindung aufgeführt. Merkmale und Details, die im Zusammenhang mit dem erfindungsgemäßen Verfahren beschrieben sind, gelten dabei selbstverständlich auch im Zusammenhang mit der erfindungsgemäßen Kommunikationseinheit und jeweils umgekehrt.

Erfindungsgemäß wird die Aufgabe durch ein Verfahren zum Betreiben einer Datenverarbeitungseinheit gelöst, mit einer Kommunikationseinheit, wobei die Kommunikationseinheit eine erste Schnittstelle und ein Kommunikationselement aufweist, mittels des Kommunikationselementes eine Kommunikationsverbindung in ein Mobilfunknetz aufbaubar ist, wobei das Verfahren die folgenden Schritte umfasst:
- die Kommunikationseinheit wird über die erste Schnittstelle mit einer zweiten Schnittstelle der Datenverarbeitungseinheit verbunden,
- nach einer Aktivierung der Datenverarbeitungseinheit wird mindestens ein Teil eines Betriebssystems mittels der Kommunikationseinheit über die Schnittstellen auf die Datenverarbeitungseinheit übertragen, und
- eine personalisierte Einstellung des Betriebssystems wird mittels der Kommunikationseinheit auf die Datenverarbeitungseinheit übertragen.

Der Kern des erfindungsgemäßen Verfahrens liegt darin, dass mittels einer Kommunikationseinheit mindestens ein Teil eines Betriebssystems sowie dessen personalisierte Einstellung auf eine Datenverarbeitungseinheit übertragen werden. Einem potenziellen Benutzer ist es somit möglich, eine beliebige Datenverarbeitungseinheit zu nutzen, ohne dabei auf das bekannte Betriebssystem in der personalisierten Einstellung zu verzichten. Es bedarf somit keiner Gewöhnung an unbekannte Betriebssysteme sowie deren Einstellungen. Vielmehr genügt die Verbindung der Kommunikationseinheit mit der Datenverarbeitungseinheit, um mittels des geladenen Betriebssystems die Datenverarbeitungseinheit zu betreiben. Das erfindungsgemäße Verfahren bietet sich insbesondere für Reisende an, da diese auch an unterschiedlichen Orten immer die ihnen bekannte Einstellung des Betriebssystems vorfinden können. Gleichfalls kann das erfindungsgemäße Verfahren in Großraumbüros genutzt werden, in denen nicht jedem Mitarbeiter ein individueller Platz zugeordnet ist.

Im Rahmen der Erfindung soll nur mindestens ein Teil des Betriebssystems von der Kommunikationseinheit auf die Datenverarbeitungseinheit übertragen werden. Damit ist umfasst, dass das Betriebssystem vollständig von der Kommunikationseinheit auf die Datenverarbeitungseinheit überspielt wird und es keiner weiteren Elemente des Betriebssystems bedarf, um die Datenverarbeitungseinheit zu betreiben. Alternativ ist es auch möglich, dass im Rahmen des erfindungsgemäßen Verfahrens zuerst nur ein Teil des Betriebssystems auf die Datenverarbeitungseinheit überspielt wird. Dieser Teil kann beispielsweise dazu genutzt werden, um weitere Elemente des Betriebssystems von einer CD zu laden. Somit unterteilt sich das Übertragen des vollständigen Betriebssystems auf die Datenverarbeitungseinheit in zwei Schritte. Im ersten Schritt wird mittels der Kommunikationseinheit ein rudimentärer Teil des Betriebssystems übermittelt. Im zweiten Schritt wird mittels einer DVD, CD oder Diskette etc. der restliche Teil des Betriebssystems auf die Datenverarbeitungseinheit überspielt.

Bei dem Betriebssystem im Sinne der Erfindung handelt es sich um ein Computerprogrammprodukt, welches die Verwendung der Datenverarbeitungseinheit ermöglicht. Das Betriebssystem verwaltet Betriebsmittel wie Speicher, Ein- und Ausgabegeräte und steuert die Ausführung von Programmen. Häufig benutzte Betriebssysteme bestehen aus einem Kern, der die Hardware des Computers verwaltet, sowie grundlegenden Systemprogrammen, die dem Start des Betriebssystems und dessen Konfiguration dienen. Die im Rahmen der Erfindung geforderte Aktivierung der Datenverarbeitungseinheit kann durch ein Bestromen geschehen. Von dem Begriff Aktivierung umfasst ist aber ebenfalls das Starten einer so genannten virtuellen Maschine auf der Datenverarbeitungseinheit. Bei der virtuellen Maschine wird nicht die Hardware der Datenverarbeitungseinheit neu gestaltet, sondern vielmehr mittels eines Computerprogrammproduktes ein Gastsystem auf der bereits arbeitenden Datenverarbeitungseinheit gestartet.

Im Rahmen einer vorteilhaften Ausgestaltung ist vorgesehen, dass die Datenverarbeitungseinheit über das Kommunikationselement der Kommunikationseinheit eine Kommunikationsverbindung in das Mobilfunknetz aufbaut. Mittels dieser Kommunikationsverbindung ist ein uni- und/oder bidirektionaler Austausch von Sprache, Daten und/oder Informationen mit dem Mobilfunknetz möglich. Vorteilhafterweise baut die Datenverarbeitungseinheit über das Kommunikationselement der Kommunikationseinheit eine Datenverbindung mit einem Server auf. Die Datenverbindung ist als Teil der Kommunikationsverbindung angelegt, wobei ein direkter Austausch von Daten und/oder Informationen mit dem Server erfolgt. Folglich ist die Datenverbindung eine Unterart der Kommunikationsverbindung. Als Server wird dabei eine zentrale oder dezentrale Rechnereinheit bezeichnet, auf welcher Daten und Informationen hinterlegt sind oder von einem Benutzer hinterlegt werden können. Bei dem Server kann es sich um eine Rechnereinheit handeln, welche beispielsweise in der Infrastruktur des Mobilfunknetzes integriert ist. Eine die Erfindung verbessernde Maßnahme sieht vor, dass die Datenverarbeitungseinheit über die Datenverbindung auf eine Speicherressource im Server zugreifen kann, wobei insbesondere in der Speicherressource personalisierte Daten hinterlegt sind. Im Rahmen des erfindungsgemäßen Verfahrens ist es einem Benutzer somit möglich, an beliebigen Orten eine Datenverarbeitungseinheit zu nutzen und nicht nur auf die personalisierte Einstellung des Betriebssystems zurückzugreifen, sondern auch von dem Server personalisierte Daten abzurufen bzw. dort zu speichern. Damit ist der Benutzer nahezu vollständig unabhängig von jener Infrastruktur, die er vorfindet. Es bedarf nur einer beliebigen Datenverarbeitungseinheit, welche mit der Kommunikationseinheit verbunden werden kann. Nach der Aktivierung präsentiert sich die Datenverarbeitungseinheit in der ihm bekannten Art und Weise und ermöglicht über die Datenverbindung einen Zugriff auf die personalisierten Daten, weshalb der Benutzer seine personalisierten Daten nicht in einem Speichermedium mit sich mitführen muss.

In einer weiteren vorteilhaften Ausführungsvariante ist das Betriebssystem auf der Kommunikationseinheit hinterlegt. Dazu kann die Kommunikationseinheit über ein Speicherelement verfügen. Wird das erfindungsgemäße Verfahren gestartet, lädt die Kommunikationseinheit das Betriebssystem von dem Speicher herunter und übermittelt es an die Datenverarbeitungseinheit. In einer abweichenden Variante ist das Betriebssystem auf dem Server hinterlegt. Bei einer Kontaktierung des Kommunikationsmittels mit der Datenverarbeitungseinheit oder vor diesem Schritt wird das Betriebssystem über die Kommunikationsverbindung von dem Server geladen. Im Anschluss daran findet die Übermittlung an die Datenverarbeitungseinheit statt. Um das Ziel des erfindungsgemäßen Verfahrens zu erreichen, hat es sich als vorteilhaft erwiesen, die personalisierte Einstellung des Betriebssystems auf der Kommunikationseinheit zu speichern. Diese Hinterlegung kann ebenfalls auf dem schon erwähnten Speicherelement erfolgen. Somit ergibt sich, dass unabhängig von der Datenverarbeitungseinheit für einen potentiellen Benutzer immer eine gleich bleibende Einstellung des Betriebssystems sichergestellt wird. Alternativ dazu kann die personalisierte Einstellung auch auf dem Server hinterlegt sein und erst bei einer Aktivierung der Datenverarbeitungseinheit mittels des Mobilfunknetzes auf die Kommunikationseinheit übermittelt wird. In einer weiteren vorteilhaften Ausführungsvariante wird die personalisierte Einstellung des Betriebssystems aus einer Datenbank geladen, welche im Server angeordnet sein kann.

In einer vorteilhaften Ausführungsvariante des erfindungsgemäßen Verfahrens steuert das Betriebssystem mindestens ein Betriebsmittel der Datenverarbeitungseinheit. Bei dem Betriebsmittel kann es sich um eines der folgenden handeln: einen Arbeitsspeicher, ein Ein- und/oder Ausgabegerät, einen Bildschirm oder ein weiteres Computerprogrammprodukt. Als Betriebsmittel sollen dabei jene Hard- und Softwareelemente der Datenverarbeitungseinheit gelten, die ein Benutzer benötigt, um die Datenverarbeitungseinheit zu nutzen. Vorteilhafterweise ist das Betriebssystem ein Computerprogrammprodukt, welches insbesondere einen Kern und mindestens ein Systemprogramm aufweist. Dabei verwaltet der Kern das oder die Betriebsmittel und das Systemprogramm dient zu einem Start und/oder einer Konfiguration der Datenverarbeitungseinheit. Weiterhin kann mittels dieses Betriebsystems mindestens ein Dienst auf der Datenverarbeitungseinheit ausgeführt werden. Je nach Anforderung kann der Dienst insbesondere zur Verständigung einer Anzahl von Prozessen und/oder Betriebsmitteln dienen, oder ein Datei- oder Verzeichnissystem steuern oder zur Datenübertragung über Netzwerke dienen oder einen Befehlssprachedienst konfigurieren.

Im Rahmen des erfindungsgemäßen Verfahrens wird die Verbindung zwischen der Kommunikationseinheit und der Datenverarbeitungseinheit über eine erste und eine zweite Schnittstelle geschaffen. Dabei wird mit erster Schnittstelle jede technische Einrichtung der Kommunikationseinheit bezeichnet, die in der Lage ist, mit einer entsprechend eingerichteten zweiten Schnittstelle der Datenverarbeitungseinheit in vordefinierter Art und Weise zu kommunizieren. Die uni- und/oder bidirektionale Übertragung von Informationen über die erste bzw. zweite Schnittstelle kann dabei über eine Leitung oder leitungslos erfolgen. So kann die erste und/oder zweite Schnittstelle nach einem der folgenden Standards betrieben werden: IrDA (Infrared Data Association), Bluetooth, ZigBee, Bluejacking, Bluesnarfing, Bluebugging, NFC, WiMAX, Wibree, Wireless LAN (IEEE 802.11), FireWire (IEEE 1394), USB (Universal Serial Bus), HDMI (High Definition Multimedia Interface), Unilink, ATA/ATAPI (Advanced Technology Attachment with Packet Interface), IEEE 488 oder IEEE 1284. Als vorteilhaft hat es sich erwiesen, wenn die leitungslose Kommunikation zwischen der ersten und zweiten Schnittstelle mittels elektromagnetischer Wellen geschieht, da dieses besonders benutzerfreundlich ist.

Aus Sicherheitsgründen laden moderne Datenverarbeitungseinheiten das genutzte Betriebssystem aus einem lokalen Speichermedium erst nach einer Abfrage einer Anzahl von Schnittstellen. Somit ist sichergestellt, dass im Falle einer Fehlfunktion des lokal gespeicherten Betriebssystems über eine Schnittstelle ein bootfähiges Betriebssystem der Datenverarbeitungseinheit zugeführt werden kann. Diese Eigenschaft wird in einer weiteren vorteilhaften Ausgestaltung des erfindungsgemäßen Verfahrens genutzt. Dieses zeichnet sich dadurch aus, dass die erste Schnittstelle und/oder die Kommunikationseinheit der Datenverarbeitungseinheit eine Schnittstellenkennung eines Mediums übermittelt, welches von der Datenverarbeitungseinheit als bootfähig erkannt wird. Dieses hat den Vorteil, dass die Datenverarbeitungseinheit nicht das lokale gespeicherte Betriebssystem lädt, vielmehr registriert die Datenverarbeitungseinheit die Schnittstellenkennung der mit der zweiten Schnittstelle verbundenen ersten Schnittstelle und lädt das Betriebssystem von der Kommunikationseinheit herunter. Beispielhaft kann es sich bei der ersten Schnittstelle und der zweiten Schnittstelle um Teile eines USB-Bussystems handeln. Nach einem Verbinden der ersten und der zweiten Schnittstelle erkennt die zweite Schnittstelle die Geräteklasse der angeschlossenen Kommunikationseinheit. Da ein spezieller Treiber für die Nutzung der ersten bzw. zweiten USB-Schnittstelle schon in der Datenverarbeitungseinheit hinterlegt ist, lädt die Datenverarbeitungseinheit direkt das Betriebssystem von der Kommunikationseinheit.

Eine weitere vorteilhafte Ausführungsvariante des erfindungsgemäßen Verfahrens zeichnet sich dadurch aus, dass im Moment einer ersten Kommunikation zwischen der Kommunikationseinheit und der Datenverarbeitungseinheit
- die Kommunikationseinheit die Schnittstellenkennung eines Speichermediums an die Datenverarbeitungseinheit übermittelt, und
- die Datenverarbeitungseinheit das Betriebssystem lädt.
Durch die Übermittlung der Schnittstellenkennung eines Wechseldatenträgers ist sichergestellt, dass zumindest eine grundlegende Kommunikation zwischen der Datenverarbeitungseinheit und der Kommunikationseinheit möglich ist. Auch wenn die so erzielte Verbindungsqualität nicht optimal ist, kann dennoch das Betriebssystem auf die Datenverarbeitungseinheit übertragen und dort installiert werden. Des Weiteren sind Wechseldatenträger heutzutage ein derart weit verbreitertes Speichermedium, dass es kaum noch Schnittstellen gibt, die diese nicht problemlos erkennen können. So sind die grundlegenden Vorraussetzungen für eine Kommunikation der Kommunikationseinheit mit der Datenverarbeitungseinheit erfüllt, ohne dass es einer vorherigen Installation einer speziellen Treibersoftware bedarf.

Eine das Verfahren verbessernde Maßnahme sieht darüber hinaus vor, dass nach dem Moment der ersten Kommunikation
- die Kommunikationseinheit die Schnittstellenkennung eines Modems an die Datenverarbeitungseinheit übermittelt, und
- dass die Datenverbindung zwischen der Datenverarbeitungseinheit und dem Server mittels des Kommunikationselements hergestellt wird.
Nachdem das Betriebssystem auf die Datenverarbeitungseinheit übertragen wurde, ist es einem Benutzer möglich seine personalisierte Einstellung zu nutzen. Zu diesem Zeitpunkt ist nur ein Zugriff auf Daten und Informationen möglich, welche in der Kommunikationseinheit gespeichert sind. Deshalb bietet das erfindungsgemäße Verfahren die Möglichkeit an, die Kommunikationseinheit als Modem zu nutzen. Dazu übermittelt die Kommunikationseinheit sämtliche Informationen an das Betriebssystem, um als Modem erkannt zu werden. Im Anschluss daran ist es möglich, über die Kommunikationsverbindung und/oder die Datenverbindung der Kommunikationseinheit Informationen und/oder Daten vom Server oder aus dem Mobilfunknetz auf die Datenverarbeitungseinheit zu übermitteln. Dadurch gestattet es das erfindungsgemäße Verfahren einem Benutzer eine beliebige Datenverarbeitungseinheit zu wählen, seine persönliche Kommunikationseinheit anzuschließen und darüber eine personalisierte Einstellung des Betriebssystems zu laden. Im Anschluss daran kann der Benutzer von einem zentralisierten Server im Mobilfunknetz sämtliche relevanten Daten laden und bearbeiten. Folglich stehen dem Benutzer an jedem beliebigen Ort immer dieselbe personalisierte Einstellung seines Betriebssystems sowie seine personalisierten Daten zur Verfügung.

Eine weitere vorteilhafte Ausgestaltung des erfindungsgemäßen Verfahrens sieht vor, dass die Kommunikationseinheit einen Datenspeicher aufweist. In dem Datenspeicher können beliebige Informationen und/oder das Betriebssystem hinterlegt sein. Zusätzlich kann in dem Datenspeicher mindestens ein Angabensatz gespeichert sein, der vorzugsweise zur Identifizierung der Kommunikationseinheit dient. Dieser Angabensatz wird an das Mobilfunknetz vorzugsweise verschlüsselt übermittelt. Zusätzlich kann mittels des Angabensatzes dem Benutzer des erfindungsgemäßen Verfahrens ein Zugriff auf die auf dem Server hinterlegten Daten ermöglicht werden.

Um den Fortschritt bei einer Übertragung des Betriebssystems anzuzeigen kann die Kommunikationseinheit ein Anzeigeelement aufweisen. Insbesondere bei sehr großen Betriebssystemen und dadurch langen Übertragungszeiten hat es sich als vorteilhaft erwiesen, den Fortschritt der Übertragung auf dem Anzeigeelement anzuzeigen. Dadurch ist es leichter für einen Benutzer festzustellen, dass sämtliche Systeme einwandfrei arbeiten.

Die der Erfindung zugrunde liegende Aufgabe wird gleichfalls durch ein Computerprogrammprodukt zur Ausführung des Verfahrens nach einem oder mehreren der vorhergehenden Ansprüche gelöst. Dabei sind die Verfahrensschritte in einem in dem Computerprogrammprodukt gespeicherten Programm integriert.

Die erfindungsgemäße Aufgabe wird weiterhin mit einer Kommunikationseinheit für ein Mobilfunknetz gelöst, mit einem Identifizierungselement, einem Kommunikationselement, wobei das Identifizierungselement einen Angabensatz beinhaltet, der zur Identifizierung der Kommunikationseinheit in dem Mobilfunknetz dient, mittels des Kommunikationselementes eine Kommunikationsverbindung zwischen dem Mobilfunknetz und der Kommunikationseinheit aufbaubar ist. Erfindungsgemäß ist vorgesehen, dass die Kommunikationseinheit eine erste Schnittstelle aufweist, über die erste Schnittstelle mindestens ein Teil eines Betriebssystems derart auf eine Datenverarbeitungseinheit übertragbar ist, dass nach einer Aktivierung der Datenverarbeitungseinheit das Betriebssystem mindestens ein Betriebsmittel der Datenverarbeitungseinheit steuert, und mittels der ersten Schnittstelle eine personalisierte Einstellung des Betriebssystems auf die Datenverarbeitungseinheit übertragbar ist.

Eine vorteilhafte Variante der Kommunikationseinheit zeichnet sich dadurch aus, dass die Kommunikationseinheit ein Anzeigeelement und/oder einen Datenspeicher aufweist, insbesondere dass auf dem Datenspeicher das bootfähige Betriebssystem hinterlegt ist. Um unabhängig von der anzutreffenden Art der Datenverarbeitungseinheit zu sein, kann der Datenspeicher mit dem darauf gespeicherten Betriebssystem austauschbar sein. Somit ist es möglich, vor Ort je nach Datenverarbeitungseinheit einen entsprechenden Datenspeicher in die Kommunikationseinheit einzuführen, um das bootfähige Betriebssystem im Rahmen des erfindungsgemäßen Verfahrens auf die Datenverarbeitungseinheit zu überspielen. Als vorteilhaft hat es sich herausgestellt, wenn der Datenspeicher ein Festspeicherelement aufweist, insbesondere einen USB-Stick, eine Compact-Flash-Karte oder ein IDE-Flash-Module. Je nach Anwendungszweck kann die Datenverarbeitungseinheit mindestens eine der folgenden Einheiten sein: ein Personal Computer (PC), ein Großrechner, ein Server, ein Laptop, ein Notebook oder ein Personal Digital Assistant (PDA). Darüber hinaus kann die Datenverarbeitungseinheit eine virtuelle Maschine sein, welche auf einer der vorbenannten Einheiten abläuft.

Weitere Maßnahmen, Merkmale, Aspekte und Effekte der Erfindung ergeben sich aus den Unteransprüchen, der nachfolgenden Beschreibung sowie den Zeichnungen. In den Zeichnungen ist die Erfindung in einem Ausführungsbeispiel schematisch dargestellt. Es zeigen:
- Fig.1: eine erfindungsgemäße Kommunikationseinheit und eine Datenverarbeitungseinheit und
- Fig.2: ein Ablaufdiagramm des erfindungsgemäßen Verfahrens.

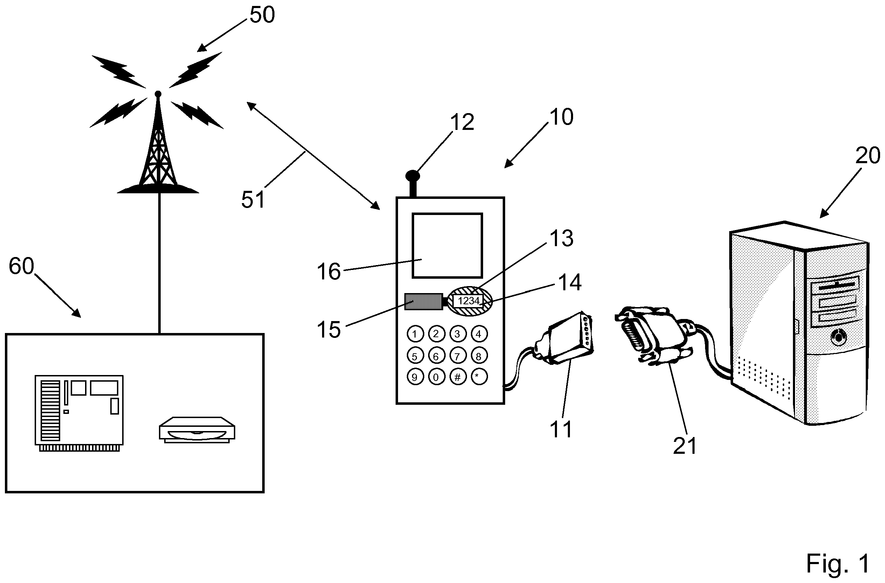

In Figur 1 ist eine erfindungsgemäße Kommunikationseinheit 10 dargestellt. Die Kommunikationseinheit 10 weist ein Kommunikationselement 12 auf, mittels dessen eine Kommunikationsverbindung 51 zwischen dem Mobilfunknetz 50 und der Kommunikationseinheit 10 aufbaubar ist. In der Figur 1 ist das Mobilfunknetz 50 nur schematisch durch einen Sende- und Empfangsturm dargestellt. Dieses soll nicht als eine Beschränkung verstanden werden; vielmehr dient der Sende- und Empfangsturm in Figur 1 nur zur Verdeutlichung des Mobilfunknetzes 50. Erfindungsgemäß weist die Kommunikationseinheit 10 eine erste Schnittstelle 11 auf, über die mindestens ein Teil eines Betriebssystems derart auf eine Datenverarbeitungseinheit 20 übertragbar ist, dass nach einer Aktivierung der Datenverarbeitungseinheit 20 das Betriebssystem mindestens ein Betriebsmittel der Datenverarbeitungseinheit 20 steuert. Weiterhin ist mittels der ersten Schnittstelle 11 eine personalisierte Einstellung des Betriebssystems auf die Datenverarbeitungseinheit 20 übertragbar.

Bei der in Figur 1 dargestellten Kommunikationseinheit 10 handelt es sich um ein Mobiltelefon, welches genutzt werden kann, um über das Kommunikationselement 12 eine Kommunikationsverbindung 51 zu dem Mobilfunknetz 50 aufzubauen und so Daten und/oder Sprachinformationen zu übertragen. Zusätzlich weist die erfindungsgemäße Kommunikationseinheit 10 einen Datenspeicher 15 auf, in dem erfindungsgemäß das Betriebssystem oder zumindest ein Teil davon hinterlegt sein kann. Findet eine Verbindung zwischen der ersten Schnittstellen 11 und einer zweiten Schnittstellen 21 der Datenverarbeitungseinheit 20 statt, wird im Rahmen des erfindungsgemäßen Verfahrens das Betriebssystem aus dem Datenspeicher 15 geladen und an die Datenverarbeitungseinheit 20 übertragen.

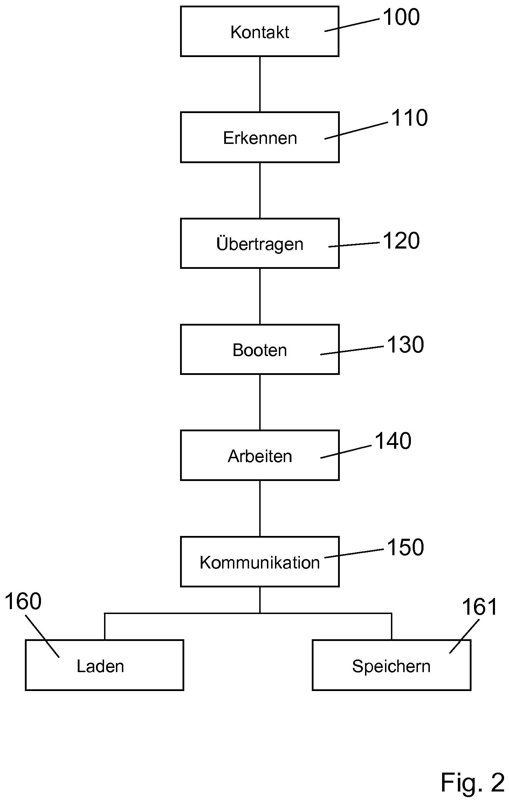

Zur Verdeutlichung des erfindungsgemäßen Verfahrens dient das Flussdiagramm in Figur 2. Ausgangspunkt ist dabei ein Kontakt 100 zwischen der Kommunikationseinheit 10 und der Datenverarbeitungseinheit 20, der über die erste Schnittstelle 11 der Kommunikationseinheit 10 und eine zweite Schnittstelle 21 der Datenverarbeitungseinheit 20 aufgebaut wird. Nach einer Aktivierung erkennt die Datenverarbeitungseinheit 20, dass an der zweiten Schnittstelle 21 die Kommunikationseinheit 10 angeschlossen ist und ein nutzbares Betriebssystem bereitliegt. Dieses Erkennen 110 resultiert darin, dass die Datenverarbeitungseinheit 20 mindestens einen Teil eines Betriebssystems von der Kommunikationseinheit 10 abfragt. Das Abfragen erfolgt in einer Übertragen 120 des Betriebssystems auf die Datenverarbeitungseinheit 20 mit einem anschließenden Booten 130. Im Anschluss an das Booten 130 benutzt die Datenverarbeitungseinheit 20 das Betriebssystem, um die Betriebsmittel zu steuern. Bei den Betriebsmitteln kann es sich insbesondere um einen Bildschirm und/oder eine Tastatur handeln, über die ein Benutzer Befehle in die Datenverarbeitungseinheit 20 eingeben kann bzw. über welche Informationen angezeigt werden.

Um den Verfahrensschritt des Erkennens 110 zu erleichtern können die Schnittstellen 11,21 eine Anzahl von unterschiedlichen Geräteklassen aufweisen, für die jeweils eine individuelle Schnittstellenkennung und ein generischer Treiber definiert sind. Dadurch ist es möglich, dass die erste Schnittstelle 11 und/oder die Kommunikationseinheit 10 der Datenverarbeitungseinheit 20 eine Schnittstellenkennung eines Mediums übermittelt, welches von der Datenverarbeitungseinheit 20 als bootfähig erkannt wird. Bei einer Aktivierung der Datenverarbeitungseinheit 20 überprüft diese sämtliche Betriebsmittel in einer vordefinierten Reihenfolge. Dabei achtet die Datenverarbeitungseinheit 20 insbesondere darauf, ob sie ein bootfähiges Betriebssystem vorfindet. Normalerweise weist die Datenverarbeitungseinheit 20 einen lokalen Speicher auf, in den das jeweilige Betriebssystem hinterlegt ist. Findet die Datenverarbeitungseinheit 20 bei der Abfrage der Betriebsmittel nur das in der lokalen Speichereinheit hinterlegte Betriebssystem wird dieses geladen. Im anderen Fall wird das Betriebssystem über die bootfähige Schnittstelle 11,21 geladen.

Mittels der erfindungsgemäßen Kommunikationseinheit 10 sowie dem beschriebenen Verfahren ist es einem Benutzer möglich, jede beliebige Datenverarbeitungseinheit 20 zum Arbeiten 140 zu nutzen. Dazu kann die Kommunikationseinheit 10 von der Datenverarbeitungseinheit 20 als ein Modem genutzt werden. So können Informationen und/oder Daten, welche in einem externen Server 60 gespeichert sind, über das Mobilfunknetz 50 geladen 160 und auf der Datenverarbeitungseinheit 20 bearbeitet werden. Im Anschluss ist ein Speichern 161 der Informationen und/oder Daten auf dem Server 60 möglich. Somit ergibt sich der Vorteil, dass ein Benutzer eine ihm fremde Datenverarbeitungseinheit 20 nutzen kann, ohne dabei auf seine personalisierte Einstellung des Betriebssystems verzichten zu müssen. Darüber hinaus können zentral im Mobilfunknetz 50 bzw. einem Server 60 hinterlegte Daten verarbeitet werden.

Weiterhin weist die Kommunikationseinheit 10 ein Identifizierungselement 13 mit einem Angabensatz 14 auf. Dieser Angabensatz 14 dient in Kombination mit dem Identifizierungselement 13 dient zur eindeutigen Identifizierung der Kommunikationseinheit 10 im Mobilfunknetz 50. Durch die Übermittlung des Angabensatzes 14 an das Mobilfunknetz 50 ist die Voraussetzung geschaffen, um auf personalisierte Daten im Server 60 zuzugreifen. Das erfindungsgemäße Verfahren in Kombination mit der erfindungsgemäßen Kommunikationseinheit 10 ermöglicht es aus einer beliebigen Datenverarbeitungseinheit 20 einen individuell angepassten Rechner zu erzeugen. Die so angepasste Datenverarbeitungseinheit 20 ist aufgrund der personalisierten Einstellung des Betriebssystems leicht für den Benutzer zu bedienen und greift über die als Modem fungierende Kommunikationseinheit 10 auf personalisierte Daten in den Server 60 zu. Somit ergibt sich für den Benutzer an jeder beliebigen Datenverarbeitungseinheit 20 immer dieselbe Arbeitsumgebung.

### Bezugszeichenliste

- 10: Kommunikationseinheit
- 11: erste Schnittstelle
- 12: Kommunikationselement
- 13: Identifizierungselement
- 14: Angabensatz
- 15: Datenspeicher
- 16: Anzeigeelement

- 20: Datenverarbeitungseinheit
- 21: zweite Schnittstelle

- 50: Mobilfunknetz
- 51: Kommunikationsverbindung

- 60: Server

- 100: erster Kontakt der ersten und zweiten Schnittstelle
- 110: Erkennung
- 120: Übertragung
- 130: Booten der Datenverarbeitungseinheit
- 140: Arbeiten der Datenverarbeitungseinheit
- 150: Verbindung zum Server
- 160: Laden von Daten aus dem Server
- 161: Speichern von Daten im Server

## Patentansprüche

1. Verfahren zum Betreiben einer Datenverarbeitungseinheit (20),
mit einer Kommunikationseinheit (10), wobei
die Kommunikationseinheit (10) ein Mobiltelefon ist und eine erste Schnittstelle (11) und ein Kommunikationselement (12) aufweist, mittels des Kommunikationselementes (12) eine Kommunikationsverbindung (51) in ein Mobilfunknetz (50) aufbaubar ist, wobei
das Verfahren die folgenden Schritte umfasst:
- die Kommunikationseinheit (10) wird über die erste Schnittstelle (11) mit einer zweiten Schnittstelle (21) der Datenverarbeitungseinheit (20) verbunden,
- nach einer Aktivierung der Datenverarbeitungseinheit (20) wird mindestens ein Teil eines Betriebssystems mittels der Kommunikationseinheit (10) über die Schnittstellen (11,21) auf die Datenverarbeitungseinheit (20) übertragen, und
- eine personalisierte Einstellung des Betriebssystems wird mittels der Kommunikationseinheit (10) auf die Datenverarbeitungseinheit (20) übertragen,
- wobei die Datenverarbeitungseinheit (20) über das Kommunikationselement (12) der Kommunikationseinheit (10) eine Kommunikationsverbindung (51) in das Mobilfunknetz (50) aufbaut, insbesondere dass die Datenverarbeitungseinheit (20) über das Kommunikationselement (12) der Kommunikationseinheit (10) eine Datenverbindung mit einem Server (60) aufbaut.
- wobei die personalisierte Einstellung des Betriebssystems im Server (60) hinterlegt ist und
- die personalisierte Einstellung des Betriebssystems aus einer Datenbank (61) geladen wird, insbesondere dass die Datenbank (61) im Server (60) angeordnet ist.

2. Verfahren nach Anspruch 1,
**dadurch gekennzeichnet,**
**dass** die Datenverarbeitungseinheit (20) über die Datenverbindung auf eine Speicherressource im Server zugreift, insbesondere dass in der Speicherressource personalisierte Daten hinterlegt sind.

3. Verfahren nach einem der vorhergehenden Ansprüche,
**dadurch gekennzeichnet,**
**dass** das Betriebssystem auf der Kommunikationseinheit (10) und/oder im Server (60) hinterlegt ist.

4. Verfahren nach einem der vorhergehenden Ansprüche,
**dadurch gekennzeichnet,**
**dass** die personalisierte Einstellung des Betriebssystems auf der Kommunikationseinheit (10) hinterlegt ist.

5. Verfahren nach einem der vorhergehenden Ansprüche,
**dadurch gekennzeichnet,**
**dass** das Betriebssystem mindestens ein Betriebsmittel der Datenverarbeitungseinheit (20) steuert, insbesondere dass das Betriebsmittel eines der folgenden ist: ein Arbeitsspeicher, ein Ein- und/oder Ausgabegerät, ein Bildschirm oder ein weiteres Computerprogrammprodukt.

6. Verfahren nach einem der vorhergehenden Ansprüche,
**dadurch gekennzeichnet,**
**dass** das Betriebssystem ein Computerprogrammprodukt ist, insbesondere dass das Betriebssystem einen Kern und mindestens ein Systemprogramm aufweist, bevorzugt dass der Kern das Betriebsmittel verwaltet und das Systemprogramm einem Start und einer Konfiguration des Betriebssystems dient.

7. Verfahren nach einem der vorhergehenden Ansprüche,
**dadurch gekennzeichnet,**
**dass** mittels des Betriebssystems mindestens ein Dienst auf der Datenverarbeitungseinheit (20) ausgeführt wird, insbesondere ein Dienst zur Verständigung einer Anzahl von Prozessen, ein Dienst eines Datei- und Verzeichnissystems, ein Dienst zur Datenübertragung über Netzwerke oder eine Befehlssprachedienst.

8. Verfahren nach einem der vorhergehenden Ansprüche,
**dadurch gekennzeichnet,**
**dass** die erste (11) und zweite Schnittstelle (21) über eine Leitung oder leitungslos, insbesondere mittels elektromagnetischer Wellen, miteinander kommunizieren.

9. Verfahren nach einem der vorhergehenden Ansprüche,
**dadurch gekennzeichnet,**
**dass** die erste Schnittstelle (11) und/oder die Kommunikationseinheit (10) der Datenverarbeitungseinheit (20) eine Schnittstellenkennung eines Mediums übermittelt, insbesondere dass die erste Schnittstelle (11) und zweite Schnittstelle (21) Teil eines USB Bussystems sind, und dass die Kommunikationseinheit (10) der Datenverarbeitungseinheit (20) eine Kennung einer USB Geräteklasse übermittelt, die von der Datenverarbeitungseinheit (20) als bootfähig erkannt wird.

10. Verfahren nach Anspruch 9,
**dadurch gekennzeichnet,**
**dass** im Moment einer ersten Kommunikation zwischen der Kommunikationseinheit (10) und der Datenverarbeitungseinheit (20)
- die Kommunikationseinheit (10) die Schnittstellenkennung eines Speichermediums an die Datenverarbeitungseinheit (20) übermittelt, und
- die Datenverarbeitungseinheit (20) das Betriebssystem (30) lädt.

11. Verfahren nach Anspruch 10,
**dadurch gekennzeichnet,**
**dass** nach dem Moment der ersten Kommunikation
- die Kommunikationseinheit (10) die Schnittstellenkennung eines Modems an die Datenverarbeitungseinheit (20) übermittelt, und
- **dass** die Datenverbindung zwischen der Datenverarbeitungseinheit (20) und dem Server (60) mittels des Kommunikationselements (12) hergestellt wird.

12. Verfahren nach Anspruch 11,
**dadurch gekennzeichnet,**
**dass** die Kommunikationseinheit (10) einen Datenspeicher aufweist, insbesondere dass in dem Datenspeicher (15) mindestens ein Angabensatz (14) gespeichert ist, insbesondere dass der Angabensatz (14) an das Server (60), vorzugsweise verschlüsselt, übermittelt wird.

13. Verfahren nach einem der vorhergehenden Ansprüche,
**dadurch gekennzeichnet,**
**dass** ein Fortschritt einer Übertragung des Betriebssystems und/oder ein Betriebsstatus der Datenverarbeitungseinheit (20) auf einem Anzeigeelement (16) der Kommunikationseinheit (10) angezeigt wird.

14. Verfahren nach einem der vorhergehenden Ansprüche,
**dadurch gekennzeichnet,**
**dass** das Verfahren auf einer virtuellen Maschine (VM) ausgeführt wird.

15. Computerprogrammprodukt zur Ausführung des Verfahrens nach einem oder mehreren der vorhergehenden Ansprüche,
**dadurch gekennzeichnet,**
**dass** die Verfahrensschritte in einem in dem Computerprogrammprodukt gespeicherten Programm integriert sind und das Programm diese Verfahrensschritte ausführt wenn es von einem Computer abgearbeitet wird.

16. Kommunikationseinheit (10) für ein Mobilfunknetz (50),
mit einem Identifizierungselement (13), einem Kommunikationselement (12), wobei
das Identifizierungselement (13) einen Angabensatz (14) beinhaltet, der zur Identifizierung der Kommunikationseinheit (10) in dem Mobilfunknetz (50) dient,
mittels des Kommunikationselementes (12) eine Kommunikationsverbindung (51) zwischen dem Mobilfunknetz (50) und der Kommunikationseinheit (10) aufgebaut wird, wobei
die Kommunikationseinheit (10) ein Mobiltelefon ist und eine erste Schnittstelle (11) aufweist,
über die erste Schnittstelle (11) mindestens ein Teil eines Betriebssystems derart auf eine Datenverarbeitungseinheit (20) übertragen wird, dass nach einer Aktivierung der Datenverarbeitungseinheit (20) das Betriebssystem mindestens ein Betriebsmittel der Datenverarbeitungseinheit (20) steuert,
und mittels der ersten Schnittstelle (11) eine personalisierte Einstellung des Betriebssystems auf die Datenverarbeitungseinheit (20) übertragen wird, wobei über die Datenverarbeitungseinheit (20) über das Kommunikationselement (12) der Kommunikationseinheit (10) eine Kommunikationsverbindung (51) in das Mobilfunknetz (50) aufgebaut wird, insbesondere dass über die Datenverarbeitungseinheit (20) über das Kommunikationselement (12) der Kommunikationseinheit (10) eine Datenverbindung mit einem Server (60) aufgebaut wird, wobei die personalisierte Einstellung des Betriebssystems im Server (60) hinterlegt ist und die personalisierte Einstellung des Betriebssystems aus einer Datenbank (61) geladen wird, insbesondere dass die Datenbank (61) im Server (60) angeordnet ist.

17. Kommunikationseinheit (10) nach Anspruch 16,
**dadurch gekennzeichnet,**
**dass** die Kommunikationseinheit (10) ein Anzeigeelement (16) und/oder einen Datenspeicher (15) aufweist, insbesondere dass auf dem Datenspeicher (15) das bootfähige Betriebssystem hinterlegt ist, bevorzugt dass der Datenspeicher (15) austauschbar ist.

18. Kommunikationseinheit (10) nach Anspruch 17,
**dadurch gekennzeichnet,**
**dass** der Datenspeicher (15) ein Festspeicherelement aufweist, insbesondere einen USB-Stick, Compact-Flash-Karte oder ein IDE-Flash-Module.

19. Kommunikationseinheit (10) nach einem der Ansprüche 16 bis 18,
**dadurch gekennzeichnet,**
**dass** die Datenverarbeitungseinheit (20) mindestens eine der folgenden Einheiten ist: ein Personal Computer (PC), ein Großrechner, ein Server, ein Laptop, ein Notebook oder ein Personal Digital Assistant (PDA).

20. Kommunikationseinheit (10) nach einem der Ansprüche 16 bis 19,
**dadurch gekennzeichnet,**
**dass** die Datenverarbeitungseinheit (20) eine virtuelle Maschine (VM) ist.

21. Kommunikationseinheit (10) nach einem der Ansprüche 16 bis 20, welche nach einem der Verfahren gemäß einem der Ansprüche 1 bis 15 betreibbar ist.

## Claims

1. A method for operating a data processing unit (20), with a communication unit (10), wherein
the communication unit (10) is a mobile phone and comprises a first interface (11) and a communication element (12),
by means of the communication element (12) a communications link (51) can be established into a mobile phone network (50),
wherein the method comprises the following steps:
- the communication unit (10) is connected, via a first interface (11), to a second interface (21) of the data processing unit (20),
- following activation of the data processing unit (20) at least part of the operating system is transferred by means of the communication unit (10) via the interfaces (11, 21) to the data processing unit (20), and
- a personalised setting of the operating system is transferred by means of the communication unit (10) to the data processing unit (20),
- wherein the data processing unit (20) builds a communications link (51) into the mobile phone network (50) via the communication element (12) of the communication unit (10), in particular in that the data processing unit (20) builds a data link to a server (60) via the communication element (12) of the communication unit (10),
- wherein the personalised setting of the operating system is stored on the server (60) and
- the personalised setting of the operating system is loaded from a database (61), in particular in that the database (61) is arranged on the server (60).

2. The method according to claim 1,
**characterised in that**
the data processing unit (20) accesses a storage resource on the server via the data link, in particular **in that** personalised data is stored in the storage resource.

3. The method according to one of the preceding claims,
**characterised in that**
the operating system is stored in the communication unit (10) and/or on the server (60).

4. The method according to one of the preceding claims,
**characterised in that**
the personalised setting of the operating system is stored in the communication unit (10).

5. The method according to one of the preceding claims,
**characterised in that**
the operating system controls at least one operating means of the data processing unit (20), in particular
**in that** the operating means is one of the following: a working memory, an input and/or output device, a monitor or another computer program product.

6. The method according to one of the preceding clams,
**characterised in that**
the operating system is a computer program product, in particular **in that** the operating system comprises a core and at least one system program, preferably **in that** the core manages the operating means and **in that** the system program serves a start and a configuration of the operating system.

7. The method according to one of the preceding claims,
**characterised in that**
by means of the operating system at least one service is executed on the data processing unit (20), in particular a service for communication of a number of processes, a service of a file and directory system, a service for data transfer via networks or a command language service.

8. The method according to one of the preceding claims,
**characterised in that**
the first (11) and the second interface (21) communicate with each other via a line or without a line, in particular by means of electromagnetic waves.

9. The method according to one of the preceding claims,
**characterised in that**
the first interface (11) and/or the communication unit (10) of the data processing unit (20) communicates an interface identifier of a medium, in particular **in that** the first interface (11) and the second interface (21) are part of a USB bus system, and **in that** the communication unit (10) of the data processing unit (20) communicates an identifier of a USB device class, which is recognised by the data processing unit (20) as being bootable.

10. The method according to claim 9,
**characterised in that**
at the moment of a first communication between the communication unit (10) and the data processing unit (20)
- the communication unit (10) communicates the interface identifier of a storage medium to the data processing unit (20), and
- the data processing unit (20) loads the operating system (30).

11. The method according to claim 10,
**characterised in that**
following the moment of first communication
- the communication unit (10) communicates the interface identifier of a modem to the data processing unit (20), and
- that the data link between the data processing unit (20) and the server (60) is established by means of the communication element (12).

12. The method according to claim 11,
**characterised in that**
the communication unit (10) comprises a data store, in particular **in that** at least one data set (14) is stored in the data store (15), in particular **in that** the data set (14) is communicated, preferably in an encoded manner, to the server (60).

13. The method according to one of the preceding claims,
**characterised in that**
a progress of a transfer of the operating system and/or an operating state of the data processing unit (20) is indicated on a display element (16) of the communication unit (10).

14. The method according to one of the preceding claims,
**characterised in that**
the method is executed on a virtual machine (VM).

15. A computer program product for executing the method according to one or more of the preceding claims,
**characterised in that**
the method steps are integrated with a program stored in the computer program product and **in that** the program executes these method steps, when it is processed by a computer.

16. A communication unit (10) for a mobile network (50)
with an identification element (13), a communication element (12), wherein
the identification element (13) includes a data set (14) which serves to identify the communication unit (10) in the mobile network (50),
a communications link (51) is established by means of the communication element (12) between the mobile network (50) and the communication unit (10),
wherein the communication unit (10) is a mobile phone with a first interface (11),
at least part of an operating system is transferred via the first interface (11) to a data processing unit (20) such that following an activation of the data processing unit (20) the operating system controls at least one operating means of the data processing unit (20),
and a personalised setting of the operating system is transferred by means of the first interface (11) to the data processing unit (20),
wherein via the data processing unit (20) via the communication element (12) of the communication unit (10) a communications link (51) is built into the mobile network (50), in particular in that via the data processing unit (20) via the communication element (12) of the communication unit (10) a data link to a server (60) is built, wherein the personalised setting of the operating system is loaded from a database (61), in particular in that the database (61) is arranged on the server (60).

17. The communication unit (10) according to claim 16,
**characterised in that**
the communication unit (10) comprises a display element (16) and/or a data store (15), in particular in that the bootable operating system is stored in the data store (15), preferably **in that** the data store (15) can be exchanged.

18. The communication unit (10) according to claim 17,
**characterised in that**
the data store (15) comprises a read-only memory element, in particular a USB stick, a compact flash card or an TDE flash module.

19. The communication unit (10) according to one of claims 16 to 18,
**characterised in that**
the data processing unit (20) is at least one of the following units : a personal computer (PC), a mainframe, a server, a laptop, a notebook or a personal digital assistant (PDA).

20. The communication unit (10) according to one of claims 16 to 19,
**characterised in that**
the data processing unit (20) is a virtual machine (VM).

21. The communication unit (10) according to one of claims 16 to 20, which can be operated according to one of the methods according to one of claims 1 to 15.

## Revendications

1. Procédé pour le fonctionnement d'une unité de traitement de données (20), avec une unité de communication (10), dans lequel
l'unité de communication (10) est un téléphone portable et comporte une première interface (11) et un élément de communication (12),
une liaison de communication (51) pouvant être établie au moyen de l'élément de communication (12) dans un réseau de téléphonie mobile (50),
dans lequel le procédé comprend les étapes suivantes :
- l'unité de communication (10) est reliée à une deuxième interface (21) de l'unité de traitement de données (20) par le biais de la première interface (11),
- après une activation de l'unité de traitement de données (20), au moins une partie d'un système d'exploitation est transmis à l'unité de traitement de données (20) au moyen de l'unité de communication (10) par le biais des interfaces (11, 21), et
- un réglage personnalisé du système d'exploitation est transmis à l'unité de traitement de données (20) au moyen de l'unité de communication (10),
- dans lequel l'unité de traitement de données (20) établit une liaison de communication (51) dans le réseau de téléphonie mobile (50) par le biais de l'élément de communication (12) de l'unité de communication (10), l'unité de traitement de données (20) établissant en particulier une liaison de communication avec un serveur (60) par le biais de l'élément de communication (12) de l'unité de communication (10),
- dans lequel le réglage personnalisé du système d'exploitation est enregistré dans le serveur (60), et
- le réglage personnaliste du système d'exploitation est téléchargé à partir d'une banque de données (61), la banque de données (61) étant en particulier stockée dans le serveur (60).

2. Procédé selon la revendication 1,
**caractérisé en ce que**
l'unité de traitement de données (20) accède à une ressource de mémoire dans le serveur par le biais de la liaison de données, en particulier **en ce que** des données personnalisées sont enregistrées dans la ressource de mémoire.

3. Procédé selon l'une des revendications précédentes,
**caractérisé en ce que**
le système d'exploitation est enregistré dans l'unité de communication (10) et/ou dans le serveur (60).

4. Procédé selon l'une des revendications précédentes,
**caractérise en ce que**
le réglage personnalisé du système d'exploitation est enregistré dans l'unité de communication (10).

5. Procédé selon l'une des revendications précédentes,
**caractérisé en ce que**
le système d'exploitation commande au moins une ressource de l'unité de traitement de données (20), en particulier **en ce que** la ressource est l'une parmi les suivantes : une mémoire vive, un dispositif d'entrée et/ou de sortie, un écran ou un autre produit de programme informatique.

6. Procédé selon l'une des revendications précédentes,
**caractérisé en ce que**
le système d'exploitation est un produit de programme informatique, en particulier **en ce que** le système d'exploitation comporte un noyau et au moins un programme système, de préférence **en ce que** le noyau gère la ressource et le programme système sert à démarrer et à configurer le système d'exploitation.

7. Procédé selon l'une des revendications précédentes,
**caractérisé en ce que**
le système d'exploitation permet d'exécuter au moins un service dans l'unité de traitement de données (20), en particulier un service pour la communication d'un nombre de processus, un service d'un système de données ou de répertoire, un service pour la transmission de données sur des réseaux, ou un système de langage de commande.

8. Procédé selon l'une des revendications précédentes,
**caractérisé en ce que**
la première (11) et la deuxième interface (21) communiquent entre elles par une ligne ou sans ligne, en particulier au moyen d'ondes électromagnétiques.

9. Procédé selon l'une des revendications précédentes,
**caractérisé en ce que**
la première interface (11) et/ou l'unité de communication (10) de l'unité de traitement de données (20) transmettent un identifiant d'interface d'un support, en particulier **en ce que** la première interface (11) et la deuxième interface (21) font partie d'un système de bus USB, et **en ce que** l'unité de communication (10) de l'unité de traitement de données (20) transmet un identifiant d'une classe d'appareils USB, laquelle est reconnue comme démarrable par l'unité de traitement de données (20).

10. Procédé selon la revendication 9,
**caractérise en ce que**
lors d'une première communication entre l'unité de communication (10) et l'unité de traitement de données (20),
- l'unité de communication (10) transmet l'identifiant d'interface d'un support de stockage à l'unité de traitement de données (20), et
- l'unité de traitement de données (20) charge le système d'exploitation (30).

11. Procédé selon la revendication 10,
**caractérisé en ce que**
lors de la première communication,
- l'unité de communication (10) transmet l'identifiant d'interface d'un modem à l'unité de traitement de données (20), et
- la liaison de données entre l'unité de traitement de données (20) et le serveur (60) est établie au moyen de l'élément de communication (12).

12. Procédé selon la revendication 11,
**caractérisé en ce que**
l'unité de communication (10) comporte une mémoire de données, en particulier **en ce qu'**au moins un ensemble d'informations (14) est enregistré dans la mémoire de données (15), en particulier **en ce que** l'ensemble d'informations (14) est transmis au serveur (60), de préférence do façon cryptée.

13. Procédé selon l'une des revendications précédentes,
**caractérisé en ce que**
un progrès d'une transmission du système d'exploitation et/ou un statut de fonctionnement de l'unité de traitement de données (20) sont indiqués sur un élément d'affichage (16) de l'unité de communication (10).

14. Procédé selon l'une des revendications précédentes,
**caractérisé en ce que**
le procédé est exécuté sur une machine virtuelle (VM).

15. Produit de programme informatique pour l'exécution du procédé selon l'une ou plusieurs des revendications précédentes,
**caractérisé en ce que**
les étapes de procédé sont intégrées à un programme enregistré dans le produit de programme informatique, et le programme exécute ces étapes de procédé lorsqu'il est mis en oeuvre par un ordinateur.

16. Unité de communication (10) pour un réseau de téléphonie mobile (50),
avec un élément d'identification (13), un élément de communication (12), dans lequel
l'élément d'identification (13) contient un ensemble d'informations (14) servant à identifier l'unité de communication (10) dans le réseau de téléphonie mobile (50),
l'élément de communication (12) permet d'établir une liaison de communication (51) entre le réseau de téléphonie mobile (50) et l'unité de communication (10),
dans laquelle l'unité de communication (10) est un téléphone portable et comporte une première interface (11),
au moins une partie d'un système d'exploitation est transmis de telle façon à une unité de traitement de données (20) par le biais de la première interface (11), qu'après une activation de l'unité de traitement de données (20), le système d'exploitation commande au moins une ressource de l'unité de traitement de données (20),
et un réglage personnalité du système d'exploitation est transmis à l'unité de traitement de données (20) au moyen de la première interface (11),
dans laquelle une liaison de communication (51) est établie sur le réseau de téléphonie mobile (50) par l'élément de communication (12) de l'unité de communication (10) par le biais de l'unité de traitement de données (20), en particulier en ce qu'une liaison de données avec un serveur (60) est établie par l'élément de communication (12) de l'unité de communication (10) par le biais de l'unité de traitement de données (20), le réglage personnalisé du système d'exploitation étant enregistré dans le serveur (60), et le réglage personnalisé du système d'exploitation étant téléchargé à partir d'une banque de données (61), la banque de données (61) étant en particulier stockée dans le serveur (60).

17. unité de communication (10) selon la revendication 16,
**caractérisée en ce que**
l'unité de communication (10) comporte un élément d'affichage (16) et/ou une mémoire de données (15), en particulier **en ce que** le système d'exploitation démarrable est enregistré dans la mémoire de données (15), de préférence **en ce que** la mémoire de données (15) est remplaçable.

18. Unité de communication (10) selon la revendication 17,
**caractérisée en ce que**
la mémoire de données (15) comporte un élément de mémoire morte, en particulier une clé USB, une carte mémoire flash ou un module IDE flash.

19. Unité de communication (10) selon l'une des revendications 16 à 18,
**caractérisée en ce que**
l'unité de traitement de données (20) est au moins l'une parmi les unités suivantes : un ordinateur personnel (PC), un ordinateur central, un serveur, un ordinateur portable ou un assistant numérique personnel (PDA).

20. Unité de communication (10) selon l'une des revendications 16 à 19,
**caractérisée en ce que**
l'unité de traitement de données (20) est une machine virtuelle (VM).

21. Unité de communication (10) selon l'une des revendications 16 à 20, laquelle peut fonctionner conformément à un procédé selon l'une des revendications 1 à 15.
